# EUROPEAN PATENT SPECIFICATION

(11) **EP 1 293 454 B1**
(45) Date of publication and mention of the grant of the patent: **02.08.2006**
(21) Application number: 02019558.2
(22) Date of filing: 02.09.2002
(51) Int. Cl.: B65G 47/31

(54) **Device for momentary separation of layered lengths of timber**
Vorrichtung zur momentanen Vereinzelung von gestapelten Holzlatten
Dispositif pour la séparation de lattes de bois empilés

(30) Priority: 03.09.2001 SE 0102913
(43) Date of publication of application: 19.03.2003
(73) Proprietor: Renholmens Mekaniska Verkstad AB, 930 47 Byske (SE)
(72) Inventor: Marklund, Gunnar, 93047 Byske (SE)
(74) Representative: Onn, Thorsten

(56) References cited:
- WO-A-97/38929

## Description

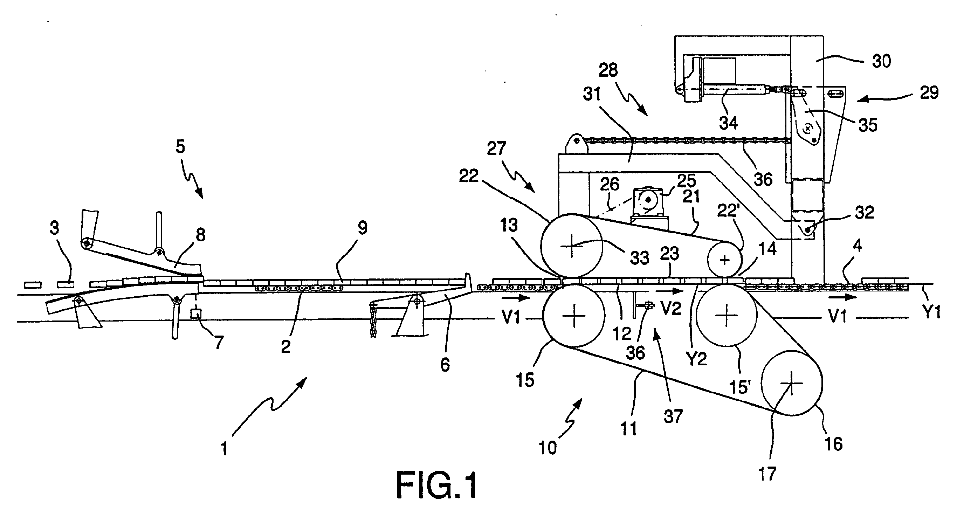

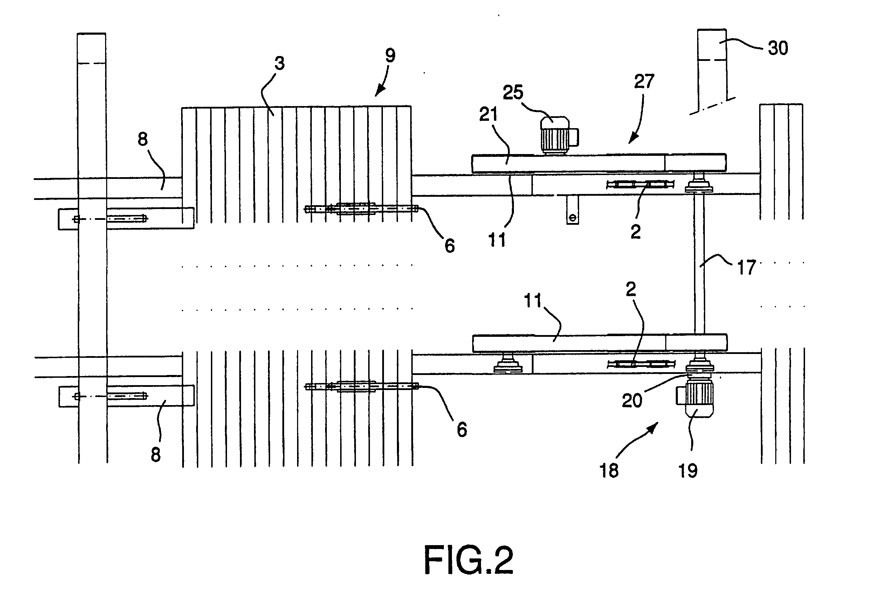

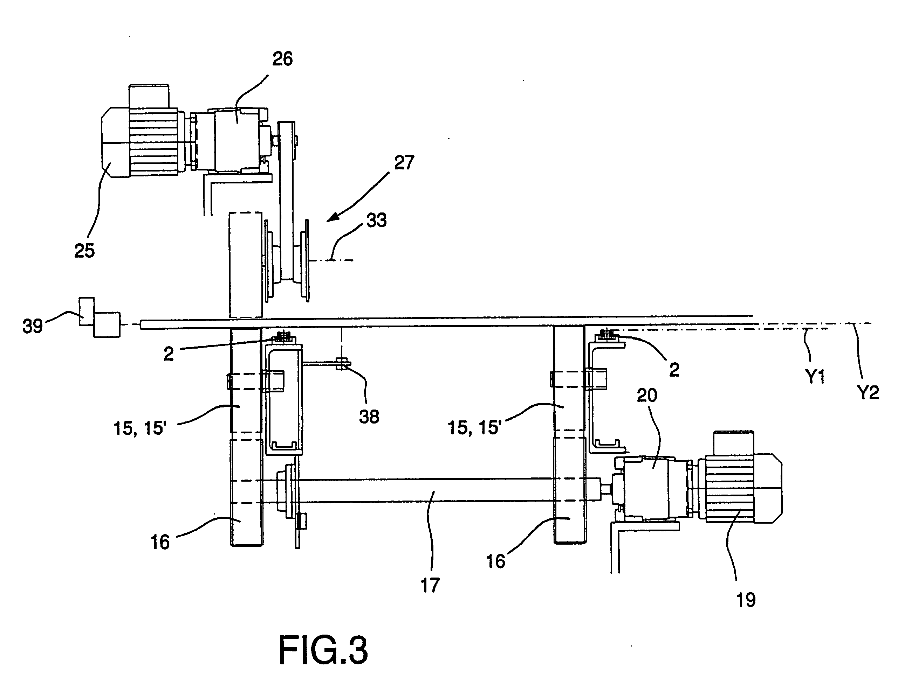

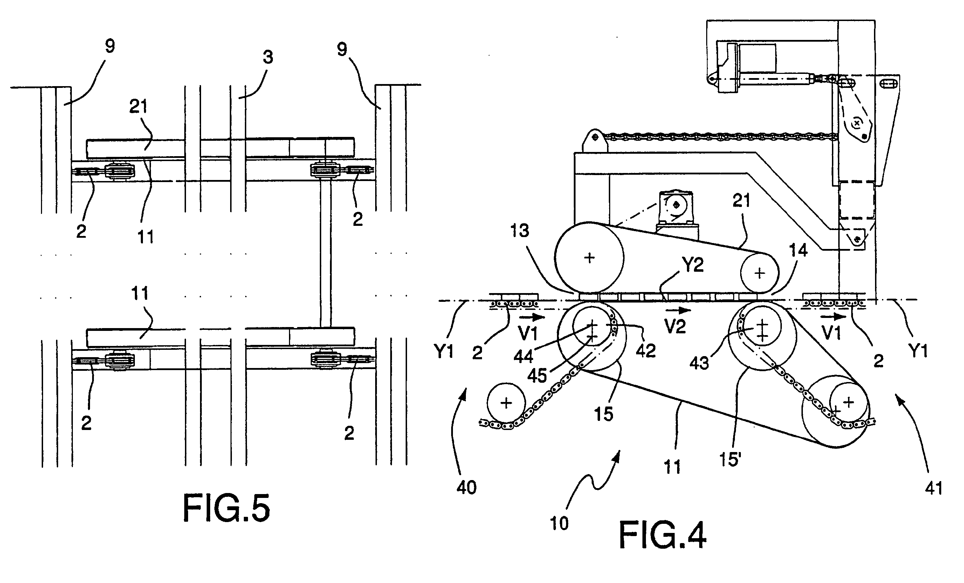

The present invention concerns a means of momentary separation of the type of timber lengths that are cross-fed in groups or gathered layers on a conveyor comprising a number of means of conveyance of principally chain type arranged to run adjacent to each other in continuous belts.
The stacking and bundling of sawn timber is being done at increasingly higher operating speeds and as part of these efforts to increase the operating speed and efficiency of stacking units it is aspired as much as possible to continuously convey the produced sawn lengths of timber to a distributor for bundling the timber into stacks. The handling of the lengths of timber on the distributor is often the point in manufacturing process that is most limiting for production capacity and as part of these efforts to make this step more efficient, transport of the said lengths of timber initially takes place in groups or series of layers, the width of which corresponds with the width of the timber stack being formed. However, in some cases there is a need to instantaneously separate the layer of timber to make it available for taking different measures. For example, the timber manufacturer and/or the purchaser of sawn timber such as board and plank will often want each individual length of timber to be given a sign or mark, which is normally done on the end face of the timber or in some other location. One requirement in this respect is that the mark so made is complete and so to speak uncut on each length of timber irrespective of whether the individual length of timber exhibits varying breadth or other kinds of form defects. It should be understood that feeding in layers to a high degree makes it difficult to mark the lengths of timber unless they are momentarily separated. Other measures that can be made include inspection or control.
One object of the present invention is therefore to achieve a means to make it possible to momentarily separate the individual lengths of timber that are fed on a conveyor as part of a group or gathered layers.
This object can be achieved with a means possessing the distinctive features and characteristics specified in claim 1.
In the preferred embodiment described below, the sub-conveyor is equipped with both a lower first means of conveyance and an upper second means of conveyance that between them define a receiving nip for the lengths of timber.
In a simpler but still working embodiment, the sub-conveyor may not exhibit an upper second means of conveyance.
An especially efficient nip is obtained if the second means of conveyance is actively driven. However, the aforesaid could also be non-driven and consequently run freely.
The following is a description of the invention with references to attached drawings, where **fig. 1** shows a side view of a means according to the present invention forming part of a conveyor for the feed of layers of timber lengths, **fig. 2** is a top view of the means shown in fig. 1, and **fig. 3** shows a schematic cross-section along the line III-III in fig. 1, **fig. 4** shows a side view of an alternative embodiment of the means shown in fig. 1, and **fig. 5** shows a top view of the means shown in fig. 4.
1 on the drawing generally designates a horizontal main conveyor that principally comprises two adjacently arranged endless means of conveyance in the form of chains 2, the speed of which, designated V₁ and usually amounts to approx. 0.6 m/s, can be regulated as desired with, for example, a variator not shown in the figure driving one drive shaft of the main conveyor. The speed of the main conveyor 1 is recorded by for example a pulse sensor arranged on the drive shaft and communicated to a system-governing control unit not shown in close detail on the drawings. As the figure illustrates, the lengths of timber 3 are cross-conveyed on transport plane Y₁, which is defined by the upper part 4 of the main conveyor's 1 endless chains 2, extending in parallel in the direction of the transport.

On the left of fig. 1 there is a layer feeder generally designated 5, arranged in conjunction with the main conveyor 1, that has a buffer zone in which the relatively uneven lengths of timber 3 can be stored temporarily against a stop means 6. The said stop means 6 is in its raised position in this connection. When a sufficient number of timber lengths 3 has been collected in the buffer zone to form a layer, a signal is sent from a means of sensing 7, not described in more detail herein, to a layer limiting means 8, which slightly lifts a length of timber following the layer while the same is clamped fast. Thereupon, the stop means 6 is moved to its lowered position, whereby the whole timber layer designated 9 is released and can move forward. Once the whole layer 9 has passed the stop means 6, it is again raised ready to collect a new layer. The output timber layer 9 is moved forward along the main conveyor 1 to a distributor arranged at its end for stacking and bundling the timber and not shown in the figures.
Between the layer feeder 5 and the distributor not shown herein there is a distribution unit generally designated 10 arranged in conjunction with the main conveyor 1 for momentarily separating individual lengths of timber 3 from the fed timber layer 9. The said distribution unit 10, hereafter called sub-conveyor, comprises a first set of means of conveyance arranged a distance from each other in the form of belts 11, which, extending parallel to the direction of transport are offset in relation to the main conveyor 1 chains 2, extend between and past them and whose transport plane Y₂, i.e. the belts' upper timber carrying part 12, in a bridging manner is arranged at a somewhat higher level than the main conveyor 1 transport plate Y₁, so that a defined transition 13 up onto the sub-conveyor and a transition 14 down from the same to the main conveyor exists between the two conveyors (see figs. 1 and 3).

Seen from the side, it is herewith evident that the part 12 of the said belts 11 carrying the lengths of timber cuts or crosses the conveyor chain 2 of the main conveyor at a first and a second point, forming the aforesaid transitions 13 and 14 respectively. Each belt 11 runs round two end rollers 15, 15' between which the upper part 12 of the belt carrying the lengths of timber 3 extends and is supported by the said transport plane without possibility of bending and continues around a drive roller 16. The belt 11 drive rollers 16 are arranged on a common drive shaft 17 that by means of a belt or chain transmission is driven by a means of propulsion generally designated 18, which in the illustrated embodiment comprises a variable speed electric motor 19 that via a shaft 20 is connected to the transmission. The variable speed motor 19 is this case arranged to continuously drive the sub-conveyor 10 at a speed that is adapted to the speed of the main conveyor 1 and a speed that is normally slightly above it.
In the preferred embodiment of the present means is included at least a second means of conveyance in the sub-conveyor 10 comprising a continuous belt 21 that is situated directly above one of the aforesaid crosswise arranged conveyor belts 11 and extending parallel with the same. This belt 21 is used to ensure that the individually separated lengths of timber 3 follow each other in a precise path over the sub-conveyor even in cases where the lengths of timber 3 exhibit certain form defects. It should be emphasised, however, that the sub-conveyor as such also works in the intended manner without the said second means of conveyance 21. It should furthermore be emphasised that although the second means of conveyance 21 is actively driven in the embodiment described below, it should be understood that the means would nevertheless work even if the second means of conveyance 21 were not driven and comprised rollers instead of a belt.
The said second belt 21 runs between two end rollers 22, 22' whereby a lower active part 23 of the belt 21 extends above and in line with the part 12 of the belt below carrying the length of timber 3, without the possibility of the bending of said belt 21 upwards at the said part 23. The lower active part 23 of the second belt 21 is situated at such a height above the part 12 of the lower belt 11 carrying the length of timber that a nip or a gap is defined between the said parts 11 and 23 respectively, in which lengths of timber 3 contained therein can be fed in the direction of transport at a speed designated V₂, which normally amounts to approx. 1 m/s. In order to transport the said lengths of timber 3 by means of interaction between the parts 12, 23, it should be understood that the respective belts 11, 21 rotate in opposite directions. It should furthermore be understood that an effective grip and lift of the arriving lengths of timber 3 is obtained if the belts 11, 21 exhibit a high coefficient of friction by means of the belts, at least on their respective active outer sides, comprising an elastomer material such as rubber. The rearmost end roller 22 of the second belt 21, viewed in the direction of transport, simultaneously acts as a drive roller and for this reason is equipped with a means of propulsion of the same generally designated 24 and which means comprises a variable speed electric motor 25 and an intermediate transmission 26 with belt or chain type gearing.
For synchronising the drive of the belts in the said sub-conveyor 9, i.e. for driving both the lower first set of belts 11 and the upper second belt 21, the respective means of propulsion 18, 24 are interconnected in such a way that the electric motor 19 for driving the lower first set of belts 11 acts as the main motor while the motor for driving the second upper belt 21 acts as a slave motor. This arrangement ensures that all the belt conveyors are always synchronised to provide equal relative speeds V₂ and coincident directions of movement.

The second upper belt 21 forms a part of a separate unit generally designated 27, which in the illustrated example is supported by a means of support generally designated 28 directly above the part 12 of the belt 11 that forms the plane carrying the timber. To make it possible to set the size of the nip or gap and thereby adapt to the thickness of the of the lengths of timber 3 being conveyed between the respective meeting parts 12, 23 of the belts 11, 21, the means of support 28 is equipped with a means of adjustment 29 with which the height of the unit 27 of which the belt 21 is a part can be adjusted. The means of adjustment 29 is controlled directly from the system control unit specified above and comprises a stand 30 on which an arm 31 is cantilevered like a boom in a rotating bearing for rotating around a shaft 32 extending in the lengthwise direction of the transported lengths of timber 3, whereby the said possibility to rotate also contributes essentially to the efficient reception and gripping of the arriving lengths of timber 3.

At the free end of the said arm 31, the unit 27 in which the belt 21 is incorporated is suspended for performing swinging movements around the rear end roller 22 shaft 33 and consequently here even around a pivot axis extending in the lengthwise direction of the transported lengths of timber 3. More exactly, the active lower part 23 of the second belt 21 in principle is applied in the direction of the upper part 12 of the first belt carrying the length of timber 3 with a force corresponding to the dead weight of the part of the said unit 27 that viewed in the direction of transport is situated after the pivot axis 33.

Using a linear controller in the form of an electric motor 34, a linkage system 35 and a flexible lifting element in the form of a chain 36 acting between the said linkage system and the free end of the arm, the unit 27 and thereby the second belt 21 are adjustable in height and in this way also the size of the nip by varying the height of the rear end roller 22 above the rear end roller 15 of the first conveyor belt 11, that is to say the distance between the outer edges of the rollers 15, 22. Through the flexible lifting element 36, the unit 27 and consequently the second belt 22 have a certain degree of free movement in the event of overloading and in this connection are free to swing up and towards the applied force, which in this connection in principle comprises the dead weight of the unit 27. In principle, it can be said that the second belt 22 "floats" freely on top of the lengths of timber 3 being fed on the belt 11. Thanks to this evasive swinging action, the risk of breakdown that could arise if any lengths of timber should be standing on edge or if several lengths of timber for some reason are stacked on top of each other is reduced. It should be understood that on this described embodiment of the invention the applied force on the lower is so chosen that there is no risk of the boards slipping while they are being transported between the meeting parts 12, 23 of the first belt 11 and the second belt 21. It is also worth considering that the application force can be increased or decreased through the action of a spring means or similar.

This described embodiment comprises also a means of marking 37 the boards 3 or lengths of timber that individually momentarily pass over the distribution unit 10, the function of which can suitably be governed from the system control unit. The said means of marking 37 comprises a means of sensing comprising a sensor in the form of a photocell 38 that is connected to the computer unit and which detects the presence of a length of timber 3, and a unit 39 for marking the end faces of the passing lengths of timber 3. The said marking unit 39 comprises an inkjet printer or some similar suitable paint spray gun that is similarly connected to the system control unit. It is also worth considering that the marking unit 37 could comprise a type of rotating stamp or similar means of printing that can mark the boards as they pass one after the other. Since the lengths of timber 3 passing the means of marking 37 are separated at a distance from each other, it is possible to treat each one of the lengths of timber 3 in the layer 9 individually. By detecting the position of each individual length of timber 3 and thereby also controlling the marking unit 39 in connection thereto, the mark can be applied to each length of timber in exactly the same uncut manner, irrespective of whether the individual lengths of timber and thereby also the collected layer of timber 9 should exhibit differences in width and form, for example. As the lengths of timber 3 passing through the sub-conveyor are pinched between the lower first means of conveyance 11 and the upper means of conveyance 21, it is assured that the end face of the length of timber 3 is always situated opposite the marking unit 39 and that the mark thereby is given a correct location even if the length of timber should exhibit form defects such as bending or warping.
Fig. 4 and 5 illustrate the present means in an alternative embodiment that in principle differs from the means described above in that the main conveyor 1, viewed in the direction of transport, comprises two transport units separate from each other and situated at a distance from each other generally designated 40 and 41 respectively between which the sub-conveyor 10 extends. The main conveyor's 1 means of conveyance 2 in the form of a respective chain runs around an end roller 42 and 43 respectively for each of the said means of conveyance 40, 41. The transport plane Y₂ of the sub-conveyor that carries the timber is hereby located essentially at the same level as the main conveyor's transport plane Y₁ in the respective areas of transition 13, 14 so that the timber transported on the main conveyor can be brought to pass over the sub-conveyor in a smooth and compliant manner. In this connection, the continuous means of conveyance 11, 2 of the sub-conveyor 10 and the main conveyor 1 respectively overlap one another slightly so that the respective meeting parts are aligned with each other in the conveyors' areas of transition 13, 14. As illustrated in fig. 4 and 5, the rotation axes of the main conveyor's 1 end rollers 42, 43 and the sub-conveyor's 10 end rollers 15, 15' designated 44, 45 in the figure are situated vertically directly one above the other.

For operating the means described initially, the main conveyor 1 and sub-conveyor 10 respectively work continuously in that the sub-conveyor's endless rotating belts 11 and 21 respectively are driven at a speed of V₂, which is somewhat higher than the speed of the main conveyor V₁. Due to the higher speed of the sub-conveyor and the nip that is formed, the timber 3 arriving in layers 9 is lifted successively one by one up to the somewhat higher transport plane of the sub-conveyor and fed along the said transport plane with a relative distance from each other that depends on the relative difference in speed V₁-V₂ between the main conveyor 1 and the sub-conveyor 10.

The present invention is not limited to the above description or as illustrated in the drawings but can be changed and modified in a number of different ways within the framework of the idea of invention specified in the following claims.

## Claims

1. Means of momentary separation of lengths of timber (3) that are cross-fed in groups or gathered in layers (9) on a main conveyor (1) comprising a number of means of conveyance (2), which primarily are of chain type running in endless paths adjacent to each other and running at a determined speed (V₁) and defining a first transport plane (Y₁) for carrying the timber, **characterised in that** in conjunction with the main conveyor (1) there is arranged a sub-conveyor (10) comprising several continuous first means of conveyance (11) of primarily belt type, running at a speed (V₂) that exceeds speed (V₁), and which are arranged laterally offset in relation to the continuous means of conveyance (2) of the main conveyor, arranged adjacent to each other in endless paths defining a second transport plane (Y₂) carrying the timber that bridges part of the first transport plane (Y₁), whereby the lengths of timber (3) transported on the main conveyor pass over the sub-conveyor.

2. Means according to claim 1, whereby, viewed in the direction of transport it comprises a continuous main conveyor (1) and the transport plane (Y₂) of the sub-conveyor (10) is situated above the transport plane (Y₁) of the main conveyor.

3. Means according to claim 1, whereby the main conveyor (1), viewed in the direction of transport, comprises two separate transport units (40,41) located a distance from each other, between which the sub-conveyor (10) extends with its transport plane (Y₂) situated level with the transport plane (Y₁) of the main conveyor.

4. Means according to any of the previous claims, whereby above the first means of conveyance (11) is arranged a second means of conveyance (21), between which and one of the first means of conveyance (11) is formed a nip in which the lengths of timber (3) transported on the main conveyor (1) are received.

5. Means according to claim 4, whereby the second means of conveyance (21) comprises a driven or non-driven continuous belt or a driven or non-driven roller.

6. Means according to any of the previous claims 1 or 2, whereby the part (12) of the sub-conveyor's (10) continuous first means of conveyance (11) that forms the second transport plane (Y₂) extends between and further past the main conveyor's (1) transport plane (Y₁), passing the same at two points that form respective transitions (13, 14) for receiving and lifting the length of timber (3) from the transport plane of the main conveyor (1) to the transport plane of the sub-conveyor and delivering and returning the length of timber down to the transport plane of the main conveyor again.

7. Means according to any one of the previous claims 4 or 5, whereby the sub-conveyor's (10) second means of conveyance (21) is arranged in a position extending parallel to the direction of transport of the said length of timber (3) and directly above the part (12) of one of the continuous means of conveyance (11) that forms the first plane of transport (Y₁) carrying the timber.

8. Means according to any one of the previous claims 4, 5 or 7, whereby the second means of conveyance (21) forms a unit (27) supported by a means of support (28) that with a means of adjustment (29) in the said means of support is adjustable in height relative to the first plane of transport (Y₁) that carries the timber and is applied with a determined force in the direction towards the said plane of transport, whereby the means of adjustment offers upwards clearance of the means of conveyance (21) from the second plane of transport (Y₂) if the said force of application should be exceeded.

9. Means according to claim 8, whereby the said force of application in principle comprises the dead weight of the separate unit (27).

10. Means according to claim 8 or 9, whereby the second means of conveyance (21) comprises a continuous belt running around a rear end roller (22) and a front end roller (22') viewed in the direction of transport, whereby the unit (27) in which the said second means of conveyance is included is articulately joined to a means of support (28) for making swinging movements around a shaft (33) extending in the lengthwise direction of the transported lengths of timber.

11. Means according to claim 10, whereby the pivot axis (33) coincides with the rotation axis of the rear end roller (22).

12. Means according to any one of the previous claims 10 or 11, whereby the rear end roller (22) forms the drive roller of the second means of conveyance (21).

13. Means according to any one of the previous claims 4 - 12, whereby the sub-conveyor's continuous means of conveyance (11) comprises some elastomer material such as rubber.

## Patentansprüche

1. Mittel zur momentanen Vereinzelung von Holzlatten (3), welche in Gruppen oder in zusammengeführten Schichten (9) quer auf einem Hauptförderer (1) zugeführt werden, der eine Anzahl Fördermittel (2) aufweist, wobei es sich hauptsächlich um Ketten handelt, die in Endlosbahnen und mit einer bestimmten Geschwindigkeit (V₁) nebeneinander laufen und eine erste Transportebene (Y₁) bilden, auf der das Holz aufliegt, **dadurch gekennzeichnet, dass** in Verbindung mit dem Hauptförderer (1) ein Unterförderer (10) angeordnet ist, der mehrere kontinuierliche erste Fördermittel (11) aufweist, wobei es sich hauptsächlich um Bänder handelt, die mit einer die Geschwindigkeit (V₁) übersteigenden Geschwindigkeit (V₂) laufen und gegenüber den kontinuierlichen Fördermitteln (2) des Hauptförderers seitlich versetzt angeordnet sind und nebeneinander in Endlosbahnen angeordnet sind, die eine zweite Transportebene (Y₂) bilden, auf der das Holz aufliegt und die einen Teil der ersten Transportebene (Y₁) überbrückt, wodurch die auf dem Hauptförderer transportierten Holzlatten (3) über den Unterförderer laufen.

2. Mittel nach Anspruch 1, wobei es in Transportrichtung gesehen einen kontinuierlichen Hauptförderer (1) aufweist und die Transportebene (Y₂) des Unterförderers (10) über der Transportebene (Y₁) des Hauptförderers liegt.

3. Mittel nach Anspruch 1, wobei der Hauptförderer (1) in Transportrichtung gesehen zwei separate, voneinander beabstandete Transporteinheiten (40, 41) aufweist, zwischen welchen sich der Unterförderer (10) erstreckt, dessen Transportebene (Y₂) auf der gleichen Höhe wie die Transportebene (Y₁) des Hauptförderers liegt.

4. Mittel nach einem der vorangehenden Ansprüche, wobei über den ersten Fördermitteln (11) ein zweites Fördermittel (21) angeordnet ist, zwischen welchem und einem der ersten Fördermittel (11) ein Spalt gebildet wird, der die auf dem Hauptförderer (1) transportierten Holzlatten (3) aufnimmt.

5. Mittel nach Anspruch 4, wobei das zweite Fördermittel (21) ein angetriebenes oder nicht angetriebenes kontinuierliches Band oder eine angetriebene oder nicht angetriebene Walze aufweist.

6. Mittel nach einem der vorangehenden Ansprüche 1 oder 2, wobei derjenige Teil (12) des kontinuierlichen ersten Fördermittels (11) des Unterförderers (10), der die zweite Transportebene (Y₂) bildet, sich zwischen der Transportebene (Y₁) des Hauptförderers (1) und über diese hinaus erstreckt und dieselbe an zwei Punkten kreuzt, die je einen Übergang (13, 14) bilden, um die Holzlatte (3) aufzunehmen und von der Transportebene des Hauptförderers (1) auf die Transportebene des Unterförderers zu heben und die Holzlatte wieder abzugeben und auf die Transportebene des Hauptförderers abzulegen.

7. Mittel nach einem der vorangehenden Ansprüche 4 oder 5, wobei das zweite Fördermittel (21) des Unterförderers (10) in einer parallel zur Transportrichtung der Holzlatte (3) verlaufenden Lage und direkt über demjenigen Teil (12) eines der kontinuierlichen Fördermittel (11) angeordnet ist, der die erste Transportebene (Y₁) bildet, auf der das Holz aufliegt.

8. Mittel nach einem der vorangehenden Ansprüche 4, 5 oder 7, wobei das zweite Fördermittel (21) eine Einheit (27) bildet, welche an einem Träger (28) aufgehängt ist, der gegenüber der ersten Transportebene (Y₁), auf der das Holz aufliegt, mittels einem Einstellmittel (29) im genannten Träger höhenverstellbar ist und mit einer bestimmten Kraft gegen die genannte Transportebene gedrückt wird, wobei das Einstellmittel das Fördermittel (21) von der zweiten Transportebene (Y₂) nach oben freigibt, falls die genannte Anpresskraft überschritten wird.

9. Mittel nach Anspruch 8, wobei die genannte Anpresskraft im Prinzip das Eigengewicht der separaten Einheit (27) einschliesst.

10. Mittel nach Anspruch 8 oder 9, wobei das zweite Fördermittel (21) ein kontinuierliches Band beinhaltet, welches um eine in Transportrichtung gesehen hintere (22) und eine vordere Rolle (22') läuft, wobei die Einheit (27), in welcher das zweite Fördermittel enthalten ist, um eine in Längsrichtung der transportierten Holzlatten verlaufende Achse (33) schwenkbar an einem Träger (28) angelenkt ist.

11. Mittel nach Anspruch 10, wobei die Schwenkachse (33) mit der Drehachse der hinteren Rolle (22) übereinstimmt.

12. Mittel nach einem der vorangehenden Ansprüche 10 oder 11, wobei die hintere Rolle (22) die Antriebsrolle des zweiten Fördermittels (21) bildet.

13. Mittel nach einem der vorangehenden Ansprüche 4 - 12, wobei das kontinuierliche Fördermittel (11) des Unterförderers ein Elastomermaterial wie Gummi aufweist.

## Revendications

1. Moyen de séparation momentanée de lattes de bois (3) qui sont amenées transversalement en groupes ou rassemblées en couches (9) sur un convoyeur principal (1) comprenant un nombre de moyens convoyeurs (2), principalement du type chaîne, se déplaçant en trajectoires sans fin l'un à côté de l'autre et se déplaçant à une vitesse déterminée (V₁) et définissant un premier plan de transport (Y₁) pour porter le bois, **caractérisé en ce que** conjointement au convoyeur principal (1) est agencé un sous-convoyeur (10) comprenant plusieurs premiers moyens convoyeurs continus (11), principalement du type bande, qui se déplacent à une vitesse (V₂) supérieure à la vitesse (V₁) et qui sont décalés latéralement par rapport aux moyens convoyeurs (2) continus du convoyeur principal, et agencés l'un à côté de l'autre en trajectoires sans fin définissant un deuxième plan de transport (Y₂) portant le bois qui contourne une partie du premier plan de transport (Y₁), de sorte que les lattes de bois (3) transportées sur le convoyeur principal passent sur le sous-convoyeur.

2. Moyen selon la revendication 1, comportant, vu dans la direction de transport, un convoyeur principal (1) continu, le plan de transport (Y₂) du sous-convoyeur (10) étant situé au-dessus du plan de transport (Y₁) du convoyeur principal.

3. Moyen selon la revendication 1, où le convoyeur principal (1), vu dans la direction de transport, comprend deux unités de transport (40, 41) séparées et situées à une distance l'une de l'autre, entre lesquelles s'étend le sous-convoyeur (10) avec son plan de transport (Y₂) situé à la même hauteur que le plan de transport (Y₁) du convoyeur principal.

4. Moyen selon l'une quelconque des revendications précédentes, où au-dessus des premiers moyens convoyeurs (11) est agencé un deuxième moyen convoyeur (21) entre lequel et l'un des premiers moyens convoyeurs (11) est formée une fente recevant les lattes de bois (3) transportées sur le convoyeur principal (1).

5. Moyen selon la revendication 4, où le deuxième moyen convoyeur (21) comporte une bande continue entraînée ou non entraînée ou un rouleau entraîné ou non entraîné.

6. Moyen selon l'une quelconque des revendications précédentes 1 ou 2, où la partie (12) du premier moyen convoyeur (11) continu du sous-convoyeur (10) qui forme le deuxième plan de transport (Y₂) s'étend entre et au-delà du plan de transport (Y₁) du convoyeur principal (1), et le croise en deux points qui forment des transitions respectives (13, 14) pour recevoir et lever la latte de bois (3) du plan de transport du convoyeur principal (1) sur le plan de transport du sous-convoyeur et délivrer et reposer à nouveau la latte de bois sur le plan de transport du convoyeur principal.

7. Moyen selon l'une quelconque des revendications précédentes 4 ou 5, où le deuxième moyen convoyeur (21) du sous-convoyeur (10) est agencé dans une position s'étendant parallèlement à la direction de transport de ladite latte de bois (3) et directement au-dessus de la partie (12) d'un des moyens convoyeurs (11) continus qui forme le premier plan de transport (Y₁) portant le bois.

8. Moyen selon l'une quelconque des revendications précédentes 4, 5 ou 7, où le deuxième moyen convoyeur (21) forme une unité (27) supportée par un moyen de support (28) réglable en hauteur par rapport au premier plan de transport (Y₁) portant le bois par un moyen de réglage (29) dans ledit moyen de support et est appliqué avec une force déterminée contre ledit plan de transport, le moyen de réglage permettant un jeu du moyen convoyeur (21) vers le haut à partir du deuxième plan de transport (Y₂) au cas où ladite force d'application serait dépassée.

9. Moyen selon la revendication 8, où ladite force d'application comprend en principe le poids mort de l'unité séparée (27).

10. Moyen selon la revendication 8 ou 9, où le deuxième moyen convoyeur (21) comprend une bande continue tournant autour d'une poulie arrière (22) et une poulie avant (22'), vues dans la direction de transport, l'unité (27) dans laquelle est contenu ledit deuxième moyen convoyeur étant articulée sur un moyen de support (28) de manière orientable autour d'un arbre (33) s'étendant en direction longitudinale des lattes de bois transportées.

11. Moyen selon la revendication 10, où l'axe de pivotement (33) coïncide avec l'axe de rotation de la poulie arrière (22).

12. Moyen selon l'une quelconque des revendications précédentes 10 ou 11, où la poulie arrière (22) constitue la poulie d'entraînement du deuxième moyen convoyeur (21).

13. Moyen selon l'une quelconque des revendications précédentes 4 - 12, où le moyen convoyeur (11) continu du sous-convoyeur comporte une matière élastomère telle que le caoutchouc.
